Europäisches Patentamt

European Patent Office

Office européen des brevets

(11) Publication number: **0 078 706**
**B1**

(12) **EUROPEAN PATENT SPECIFICATION**

(45) Date of publication of patent specification: **11.06.86**

(51) Int. Cl.⁴: **F 28 F 13/00** // F23C11/02

(21) Application number: **82305824.3**

(22) Date of filing: **02.11.82**

(54) **Fluidized bed heat exchanger incorporating induced circulation utilizing directional and/or differential bed fluidization.**

(30) Priority: **03.11.81 US 317979**
**17.11.81 US 322310**

(43) Date of publication of application:
**11.05.83 Bulletin 83/19**

(45) Publication of the grant of the patent:
**11.06.86 Bulletin 86/24**

(84) Designated Contracting States:
**GB NL SE**

(56) References cited:
**WO-A-79/00794**
**FR-A-2 371 227**
**FR-A-2 474 525**
**GB-A-1 339 287**
**GB-A-2 010 453**
**GB-A-2 011 045**
**GB-A-2 085 748**
**NL-A-8 101 701**
**US-A-4 240 364**
**US-A-4 335 661**

(73) Proprietor: **FOSTER WHEELER ENERGY CORPORATION**
**110 South Orange Avenue**
**Livingston New Jersey 07039 (US)**

(72) Inventor: **Stewart, Robert D.**
**38 Brookside Terrace**
**Verona New Jersey (US)**
Inventor: **Gamble, Robert L.**
**27 Yellowbrick Road**
**Wayne New Jersey (US)**

(74) Representative: **Bowman, Paul Alan et al**
**LLOYD WISE, TREGEAR & CO. Norman House**
**105-109 Strand**
**London WC2R 0AE (GB)**

Courier Press, Leamington Spa, England.

## Description

### Background of the Invention

This invention relates to a fluidized bed heat exchanger and, more particularly, to a heat exchanger in which heat is generated by the combustion of particulate fuel in a fluidized bed.

The use of fluidized beds has long been recognized as an attractive way of generating heat. In a normal fluidized bed arrangement, air is passed through a perforated plate, or grid, which supports a bed of particulate material, usually including a mixture of fuel material, such as high sulfur bituminous coal, and an adsorbent material for the sulfur released as a result of the combustion of the coal. As a result of the air passing through the bed, the bed behaves like a boiling liquid which promotes the combustion of the fuel. In addition to enjoying a capability for considerably reducing the amount of sulfur-containing gases introduced to the atmosphere, such an arrangement permits relatively high heat transfer rates, substantially uniform bed temperatures, combustion at relatively low temperatures, a reduction in corrosion and boiler fouling and a reduction in boiler size.

In the fluidized bed combustion process, the coal and adsorbent are continuously introduced into the bed by suitable feeders, injectors, or the like and the spent coal and adsorbent are discharged from the lower portion of the bed, usually through a gravity drain pipe extending through a wall of the heat exchanger or through a discharge opening formed through the perforated support plate. However, in these type of arrangements, there is only a minimal number of feeders or injectors, which are usually mounted through the heat exchanger walls, which results in poor distribution and mixing of the particulate material in the bed and therefore an insufficient residence time and a reduced reaction efficiency.

Reference is directed to GB—A—1,339,287 which addresses the problem of distributing solids material, particularly in shallow fluidized beds. Apparatus is disclosed in which a housing has partition means superjacent a floor element which defines at least two intercommunicating compartments. Nozzles in the floor element direct a fluidizing medium in opposite directions on either side of a partition to cause solids material from one compartment to an adjacent compartment.

The problem of residence time and reaction efficiency is specially acute in connection with particulate coal of high reactivity, such as lignite, and/or relatively fine size particles (smaller than 1/8 inch or 3.2 mm), and/or density particles, all of which require good mixing and distribution for maximum efficiency. Conversely, the feed of larger sized coal may leave larger sized ash particles which can be difficult to drain from the bed.

The present invention seeks to provide a fluidized bed heat exchanger in which an improved mixing and distribution of the bed material in the bed is achieved in a relatively inexpensive and simple manner. Particularly, consideration is given to the circulation of bed material within the bed in a direction from the inlet to the drain in such a manner as to provide sufficient residence time so that larger particles can react in the bed and thus not pass through the drain. According to the invention circulation of the bed materials is induced either by a plurality of fluidization nozzles with directional exhausts oriented to impart momentum to the bed materials or by varying the quantity of fluidizing gas in different areas or zones of the bed to cause higher and lower bed densities to exist in different zones of the bed, to cause circulation in the desired direction and improved draining.

A fluidized bed heat exchanger according to the invention which uses fluidization nozzles with directional exhausts comprises a perforated plate adapted to support a bed of particulate material, with a plurality of nozzles disposed in the perforations and oriented to discharge fluidizing air in directions substantially parallel to the plate; means for passing air through the nozzles to fluidize particulate material in said bed; inlet means for introducing additional particulate material to said bed; and drain means registering with said bed for discharging spent bed material. The nozzles comprise three groups; a first group oriented to discharge air in a first direction towards the drain means, and second and third groups oriented to discharge air in opposite senses on a common direction substantially perpendicular to the first direction and directly towards the drain means. Air from the first group of nozzles induces movement of bed material towards the common direction, and air from the second and third groups induces movement of bed material towards the drain means.

A fluidized bed heat exchanger according to the invention in which the quantity of fluidizing gas in the bed is varied to cause circulation of bed material also comprises a perforated plate adapted to support a bed of particulate material, with a plurality of nozzles disposed in the perforations for discharging fluidizing air into said bed; means for passing air through the nozzles to fluidize particulate material in said bed; inlet means for introducing additional particulate material to said bed; and drain means registering with said bed for discharging spent bed material. In this alternative however, each nozzle is oriented to discharge air in a direction perpendicular to the plate, and the density of nozzles increases in a direction across the plate from the inlet means to the drain means to create a differential pattern of discharged air thereacross and thereby induce circulation of material in the bed from the inlet means to the drain means.

Heat exchangers of the invention can thus be operated to cause particulate materials in the bed to move in an irregular path which increases residence time of the larger particles which may otherwise tend to segregate and settle to the grid. In this way an improved distribution and mixing of the materials may be achieved, while simultaneously promoting drainage of large size ash particles which may tend to segregate to the bottom of the bed.

Further preferred features and advantages of the invention will be apparent from the following description of embodiments thereof, given by way of example. The description refers to the accompanying drawings in which:

Fig. 1 is a vertical sectional view of an embodiment of the fluidized bed heat exchanger of the present invention;

Fig. 2 is a reduced plan view depicting the heat exchanger of Fig. 1 with the bed material omitted in the interest of clarity;

Fig. 3 is a view similar to Fig. 1 but depicting another embodiment of the fluidized bed heat exchanger of the present invention;

Fig. 4 is a view similar to Fig. 2 but depicting the heat exchanger of Fig. 3;

Fig. 5 is a view similar to Fig. 1 but depicting another embodiment of the fluidized bed heat exchanger of the present invention;

Fig. 6 is a view similar to Fig. 1 but depicting still another embodiment of the fluidized bed heat exchanger of the present invention; and

Fig. 7 is a view similar to Fig. 2 but depicting the heat exchanger of Fig. 6.

Description of the Preferred Embodiment

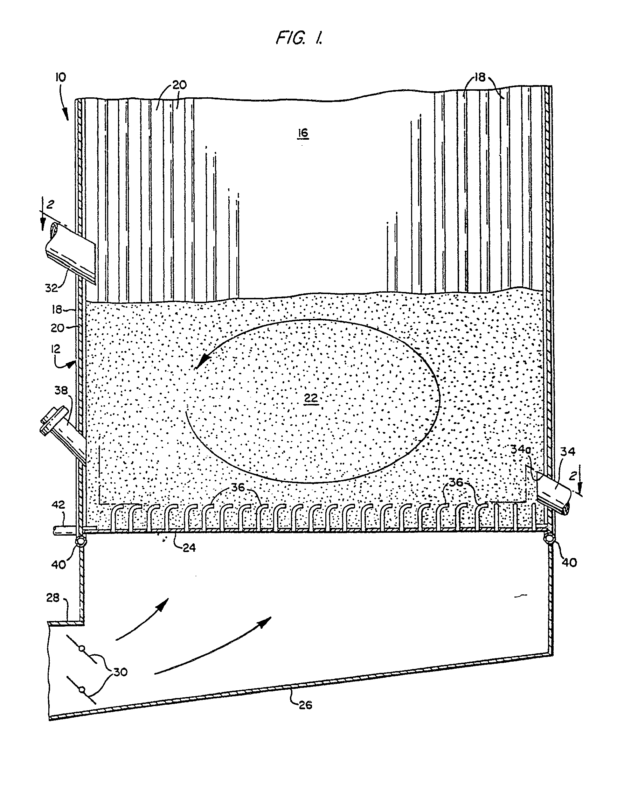

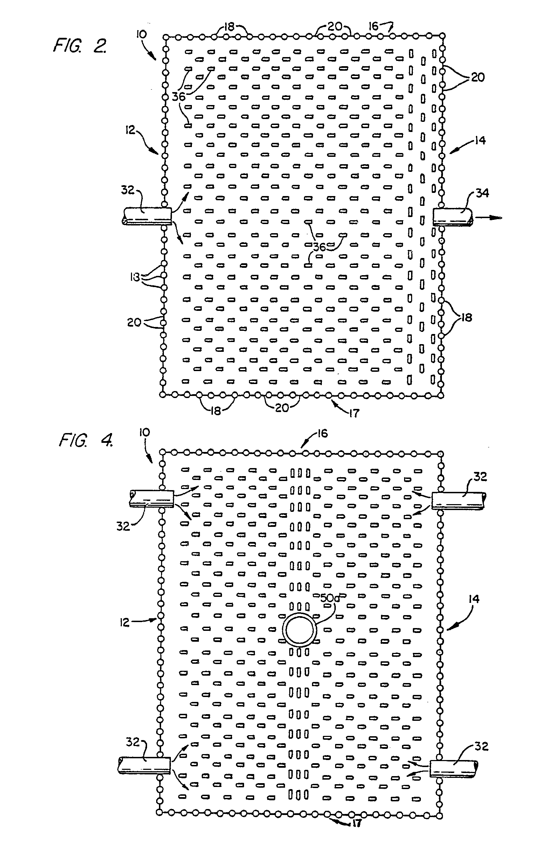

Referring to Figs. 1 and 2 of the drawings, the reference numeral 10 refers in general to an enclosure forming a major portion of a fluidized bed heat exchanger which may be in the form of a boiler, a combustor, a process reactor or any similar type device. The enclosure 10 consists of a front wall 12, a rear wall 14, and two sidewalls 16 and 17 respectively. According to the exemplary embodiment shown, each wall is formed by a plurality of vertically-extending tubes 18 disposed in a spaced, parallel relationship and connected together by a plurality of elongated fins 20 extending for the entire lengths of the tubes and connected to diametrically opposed surfaces of the tubes in a conventional manner. The upper portion of the enclosure 10 is not shown for the convenience of presentation, it being understood that it consists of a convection section, a roof and an outlet for allowing the combustion gases to discharge, also in a conventional manner.

A bed of particulate material, shown in general by the reference numeral 22 is disposed within the enclosure 10 and rests on a perforated plate 24 extending horizontally in the lower portion of the enclosure. The bed 22 can consist of a mixture of discrete particles of fuel material such as bituminous coal, and an adsorbent, such as limestone, for adsorbing the sulfur released by the combustion of the fuel material.

An air plenum 26 is provided immediately below the plate 24 and an inlet 28 is provided through the plenum for distributing pressurized air from an external source (not shown) to the plenum under the control of a pair of dampers 30.

An overbed feeder 32 extends through the front wall 12, receives particulate coal from inlet ducts or the like (not shown), and is adapted to feed the coal particles onto the upper surface of the bed 22. The feeder 32 can operate by gravity discharge or can be in the form of a spreader-type feeder or any other similar device. It is understood that a feeder can also be provided for discharging an adsorbent onto the bed 22, and would be constructed and arranged in a manner similar to the feeder 32.

A drain pipe 34 extends through the wall 14 and has an inlet end portion 34a that registers with the interior of the enclosure 10 in communication with the lower portion of the bed 22. The pipe 34 is thus adapted to receive the spent bed material and functions to discharge the material from the enclosure 10 by gravity to a screw cooler, conveyor belt, or the like (not shown).

A plurality of air distributors, or nozzles 36 communicate with the perforations of the plate 24 and each nozzle includes a vertically disposed tubular member that is secured to the plate in any conventional manner, such as by bolting or welding. The vertical portions of the nozzles 36 extend upwardly from the plate 24 for a predetermined distance into the bed 22 and their lower ends receive air from the plenum 26. Each nozzle 36 is bent at approximately a ninety degree angle to form a horizontally extending portion which is oriented in a manner to be described in detail later. As a result of the foregoing, the air from the plenum 26 enters the vertical portions of the nozzles 36 and discharges from the horizontal portions into the bed 22. In addition, the pitch of or number of nozzles per unit of bed area can be varied to cause zones of different bed density to achieve a desirable circulation. Similarly, the nozzle type or size, at constant pitch, can be varied to vary the air or gas flow. Similarly, at constant pitch, air flow, regulated by external dampers and plenum division plate can be varied in different zones of the bed. Since the air ultimately rises by convection in the enclosure 10 and discharges, along with the gaseous products of combustion, from an outlet (not shown) in the upper portion of the enclosure, the bed material extending above the horizontal nozzle portions is fluidized. Also, a dormant layer of particulate material is formed around the vertical portions of the nozzles 36 which acts to insulate the plate 24 from the heat generated in the heat exchanger extending above nozzles 36.

As shown in Figs. 1 and 2, a large majority of the nozzles 36 are oriented so that their horizontal discharge portions are directed towards the drain pipe 34 in general, and toward the rear wall 14 in particular, while a portion of the nozzles 36 (two rows in the example shown) adjacent the wall 14 are oriented so that their horizontal portions extend perpendicular to the horizontal portions of the other nozzles and directly towards the drain pipe 34. As a result of this orientation, a momentum is imparted to the bed material which induces a circulation of the material in the direction indicated by dashed flow arrows in Fig. 1 to insure superior distribution, mixing and draining of the particulate material.

A bed light-off burner 38 is provided through the front wall 12 immediately above the plate 24 for initially lighting off the bed during startup in a conventional manner.

A pair of horizontal headers 40 are connected in fluid communication with the tubes 18 forming the front wall 12 and the rear wall 14, respectively, and another horizontal header 42 is connected in fluid communication with the tubes 18 forming the sidewalls 16. It is understood that headers similar to the headers 40 and 42 are provided in communication with both ends of the sidewall 17 and the upper ends of the walls 12, 14 and 16. As a result, a fluid to be heated can be sequentially or simultaneously passed through the walls 12, 14, 16 and 17 to pick up the heat from the fluidized bed in a conventional manner.

In operation, the dampers 30 associated with the air plenum 26 are opened and pressurized air passes up through the plenum and into the inlet ends of the nozzles 36. The air flows upwardly through the vertical portions of the nozzles 36 before passing through the horizontal portions and discharging into the bed 22 at a plane above the plane of the plate 24. The air passes through the bed 22 in a generally upwardly direction towards the drain pipe 34. Thus, that portion of the particulate material in the bed 22 extending immediately above the nozzles 36 is fluidized in a manner to induce a circulation of the particulate material in the bed feeder 32 towards the drain pipe 34, while the portion extending between the latter ends and the upper surface of the plate 24 remains dormant, or stagnant.

The light-off burner 38 is then fired to heat the material in the bed until the temperature of the material reaches a predetermined level, and additional particulate fuel is discharged from the feeder 32 while adsorbent material is discharged onto the upper surface of the bed 22 as needed.

After the bed 22 has been fluidized and has reached a predetermined elevated temperature in accordance with the foregoing, the light-off burner 38 is turned off while the feeder 32 continues to distribute particulate fuel to the upper surface of the bed in accordance with predetermined feed rates. As a result of the foregoing, an improved mixing and distribution of the particulate material is achieved due to the momentum imparted to the bed material and the improved circulation of the latter within the bed. Also, the dormant layer of particulate material extending between the upper surface of the plate 24 and the horizontal portions of the nozzles 36 acts as an insulator for the plate 24.

Fluid, such as water, to be heated is passed into the headers 40 and 42 where it passes simultaneously, or in sequence, through the tubes 18 forming the walls 12, 14, 16 and 17 to add heat from the fluidized bed to the fluid before it is passed to external apparatus for further processing.

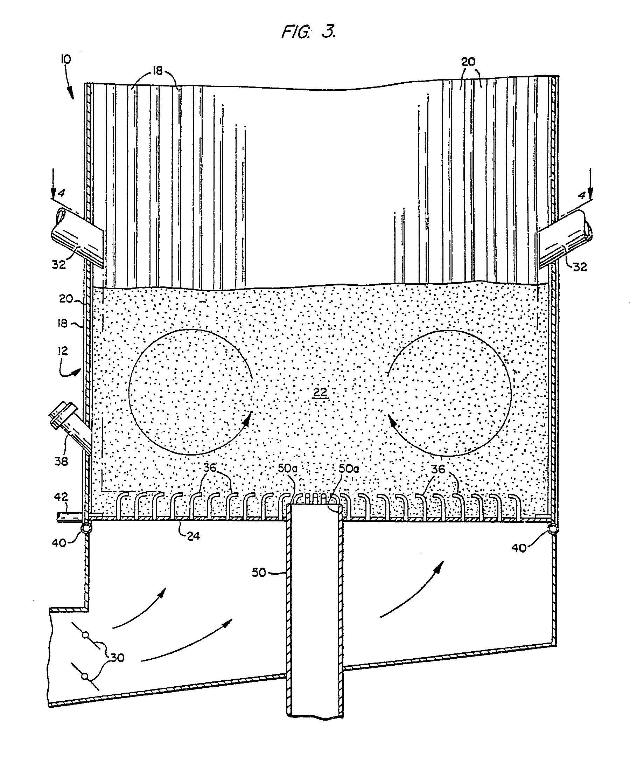

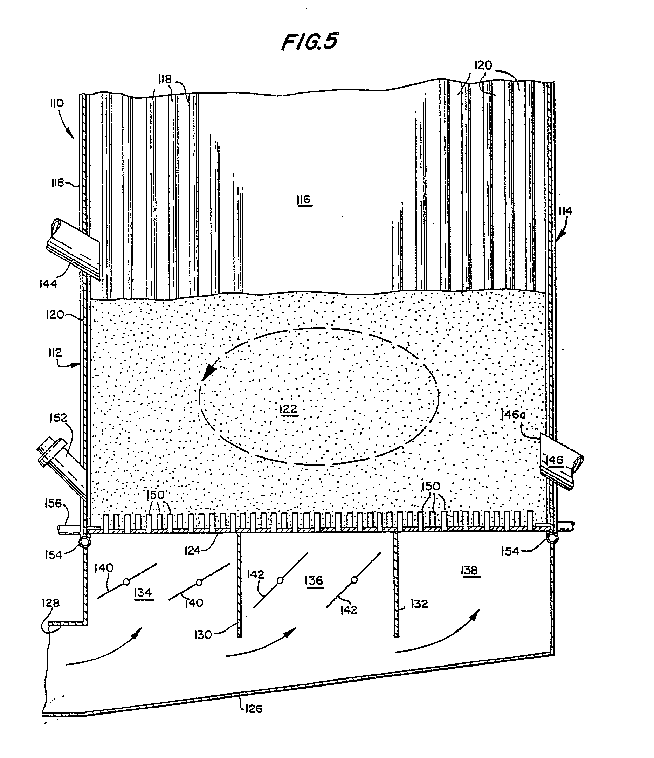

The embodiment of Figs. 3 and 4 is similar to that of the embodiment of Figs. 1 and 2, and identical components have been given the same reference numerals. According to the embodiment of Figs. 3 and 4, a centrally located drain pipe 50 extends through the air plenum 26 and has an inlet end portion 50a that extends through, and projects slightly upwardly from, an enlarged opening formed in the plate 24.

As can be better appreciated from Fig. 4, the drain pipe 50 is disposed midway between the walls 12 and 14 and midway between the walls 16 and 17, and thus in the central portion of the plate 24.

Four feeders 32 are provided for discharging coal particles onto the upper surface of the bed 22, with two feeders extending through the front wall 12 and two extending through the rear wall 14.

According to this embodiment, the nozzles 36, which are identical in construction to the nozzles of the previous embodiment, are oriented in a general direction towards the centrally located drain pipe 50. More particularly, the nozzles 36 extending between the front wall 12 and the drain pipe 50 are oriented to discharge the air in a general left-to-right direction as viewed in Figs. 1 and 4 while the nozzles extending between the rear wall 14 and the drain pipe 50 are oriented to discharge the air in a general right-to-left direction. Also, a portion of the nozzles 36 extending in three rows and between the side walls 16 and the drain pipe 50 are oriented in a direction perpendicular to the remaining nozzles and directly towards the drain pipe 50. Similarly, the remaining nozzles in these three rows and disposed between the sidewall 17 and the drain pipe 50 are also oriented in a perpendicular direction and towards the drain pipe 50.

Therefore, according to this embodiment, an improved mixing and distribution of the particulate material is also achieved as a result of the momentum imparted to the material and the improved circulation of the material within the bed.

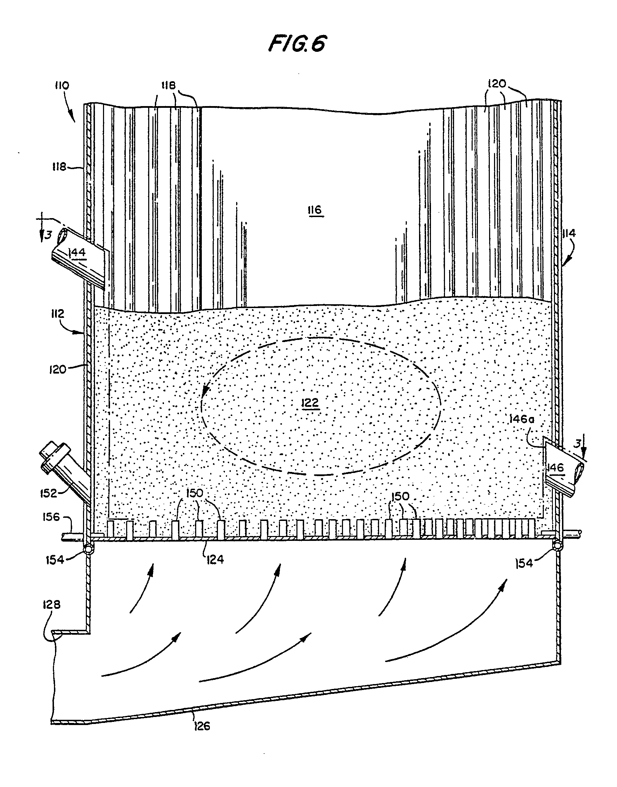

Referring to the embodiment of Fig. 5, the reference numeral 110 refers in general to an enclosure forming a major portion of a fluidized bed heat exchanger which may be in the form of a boiler, a combustor, a process reactor of any similar type device. The enclosure 110 consists of a front wall 112, a rear wall 114, and two sidewalls 116, one of which is shown in Fig. 5. According to the exemplary embodiment shown, each wall is formed by a plurality of vertically-extending tubes 118 disposed in a spaced, parallel relationship and connected together by a plurality of elongated fins 120 extending for the entire lengths of the tubes and connected to diametrically opposed surfaces of the tubes in a conventional manner. The upper portion of the enclosure 110 is not shown for the convenience of presentation, it being understood that it consists of a convection section, a roof and an outlet for allowing the combustion gases to discharge, also in a conventional manner.

A bed of particulate material, shown in general by the reference numeral 122 is disposed within the enclosure 110 and rests on a perforated plate 124 extending horizontally in the lower portion of the enclosure. The bed 122 can consist of a mixture of discrete particles of fuel material such as bituminous coal, and a adsorbent, such as limestone, for adsorbing the sulfur released by the combustion of the fuel material.

An air plenum 126 is provided immediately below the plate 124 and an inlet 128 is provided through the plenum for distributing pressurized air from an external source. Two partitions 130 and 132 are provided in the plenum 126 and divide the plenum into three sections 134, 136 and 138.

A pair of dampers 140 are adjustably mounted in the plenum section 134 and a pair of dampers 142 are adjustably mounted in the plenum section 136. The dampers 140 and 142 are of a conventional design and function to vary the flow rate of air (in terms of pounds per hour, or the like) through the plenum sections 134 and 136 respectively, with the dampers being set so that the flow rate through the section 136 is less than that through the section 138 and greater than that through the section 134, for reasons that will be explained in detail later.

An overbed feeder 144 extends through the front wall 112, receives particulate coal from inlet ducts or the like (not shown), and is adapted to feed the coal particles onto the upper surface of the bed 122. The feeder 144 can operate by gravity discharge or can be in the form of a spreader-type feeder or any other similar device. It is understood that a feeder can also be provided for discharging an adsorbent onto the bed 122, and would be constructed and arranged in a manner similar to the feeder 144.

A drain pipe 146 extends through the wall 114 and has an inlet end portion 146a that registers with the interior of the enclosure 110 in communication with the lower portion of the bed 122. The pipe 146 is thus adapted to receive the spent bed material as it migrates downwardly in the bed and functions to discharge the material from the enclosure 110 by gravity to a screw cooler, conveyor belt, or the like (not shown).

A plurality of air distributors, or nozzles 150 communicate with the perforations through the plate 124, respectively, with each nozzle being in the form of a vertically disposed tubular member which is secured to the plate in any conventional manner, such as by bolting or welding, and which extends upwardly from the plate 124 for a predetermined distance into the bed 122. Air from the plenum 126 thus enters the lower end portions of the nozzles 150 and discharges, along with the gaseous products of combustion, from an outlet (not shown) in the upper portion of the enclosure. The bed material extending above the nozzles is fluidized by the air as it takes part in combustion of fuel from the feeder 144. Also, a dormant layer of particulate material is formed around the vertical portions of the nozzles 150 which acts to insulate the plate 124 from the heat generated in the heat exchanger extending above the nozzles.

The nozzles 150 are evenly spaced across the plate 124 with the nozzles of each row being offset from the nozzles of an adjacent row. The flow rate of air from the plenum 126 to the nozzles 150 is varied by selectively controlling the position of the dampers 140 and 142 and, therefore, the flow rate through the plenum sections 134 and 136 respectively. More particularly, the dampers 134 and 136 are normally positioned approximately as shown in Fig. 5 with the flow rate through the section 134 being less than that through the section 136. Since the flow rate through the section 136, in turn, is less than that through the section 138 (which has no dampers), it can be appreciated that the flow rate of air passing through the nozzles 150 and into the bed 122 increases in a direction from left to right, as viewed in Fig. 1, or in a direction from the feeder 144 to the drain pipe 146. This induces a circulation of the bed material in a direction from the feeder 144 to the drain pipe 146 and thus insures superior distribution and mixing of the particulate material, as will be explained in greater detail later.

A bed light-off burner 152 is provided through the front wall 112 immediately above the plate 124 for initially lighting off the bed during startup in a conventional manner. A pair of horizontal headers 154 are connected in fluid communication with the tubes 118 forming the front wall 112 and the rear wall 114, respectively, and another pair of horizontal headers 156 are connected in fluid communication with the tubes 118 forming the sidewalls 116. It is understood that headers similar to the headers 154 and 156 are provided in communication with the upper ends of the walls 112, 114, and 116. As a result, a fluid to be heated can be sequentially or simultaneously passed through the walls 112, 113 and 116 to pick up the heat from the fluidized bed in a conventional manner.

In operation, pressurized air is introduced into the plenum inlet 128 and passes up through the plenum 126 and into the plenum sections 134, 136 and 138. The air flows upwardly through the plenum sections 134, 136 and 138 and into the nozzles 150 with the flow rate through the sections 134 and 136 being under control of the dampers 140 and 142, respectively. The air then passes through the nozzles 150 and discharges into the bed 122 at a plane above the plate of the plate 124. The dampers 140 and 142 are adjusted to the approximate relative positions shown so that the flow rate of air through the plenum section 134 is less than that through the section 136.

Since there are no dampers in the section 138, it can be appreciated that the flow rate of the air introduced into the bed 122 increases, and the density of the bed particles decreases, in a direction from the front wall 112, where the feeder 144 is located to the rear wall 114, where the drain pipe 146 is located. As a result of this variation in density of the bed material across the bed, that portion of the particulate material in the bed 122 extending immediately above the nozzles 150 in the lower bed portion is fluidized in a manner to induce a circulation of the bed material from the feeder 144 towards the drain pipe 146, while the particulate material in the upper bed portion tends to circulate in an opposite direction as shown by the dashed flow arrow in Fig. 1.

The light-off burner 152 is then fired to heat the material in the bed until the temperature of the material reaches a predetermined level, and additional particulate fuel and adsorbent material are discharged onto the upper surface of the bed 122 as needed.

After the bed 122 has been fluidized and has reached a predetermined elevated temperature in accordance with the foregoing, the light-off burner 152 is turned off while the feeder 144 continues to distribute particulate fuel to the upper surface of the bed in accordance with the predetermined feed rates. As a result of the foregoing, and especially the introduction of the fluidizing air into the bed at varying flow rates to vary the density of the bed, a superior mixing and distribution of the particulate material is achieved due to the momentum imparted to the bed material and the improved circulation of the latter within the bed. This increases the residence time of the particulate materials and thus considerably improves the reaction efficiency. Also, the layer of particulate material extending between the upper surface of the plate 124 and the upper ends of the nozzles 150 is relatively dormant and thus acts as an insulator for the plate 124.

Fluid, such as water, to be heated is passed into the headers 154 and 156 where it passes simultaneously, or in sequence, through the tubes 118 forming the walls 112, 114 and 116 to add heat from the fluidized bed to the fluid before it is passed to external apparatus for further processing.

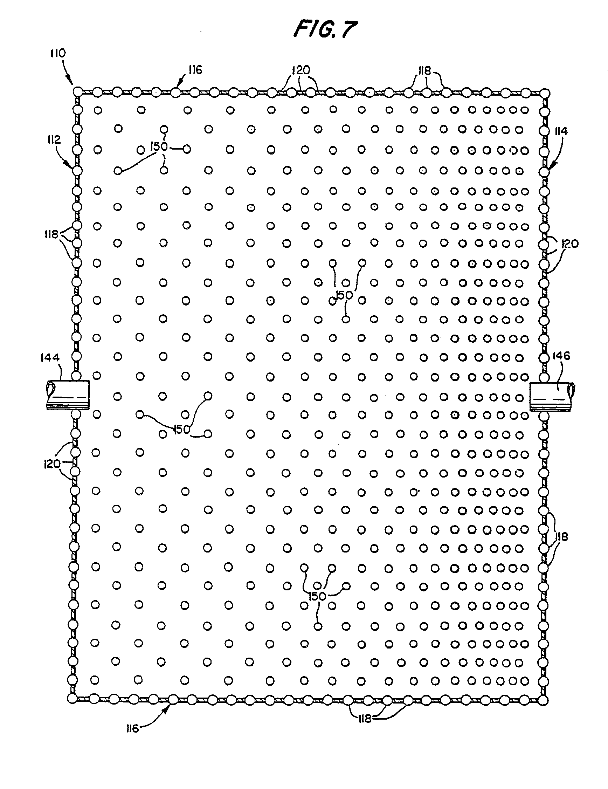

The embodiment of Figs. 6 and 7 is similar to that of the embodiment of Fig. 5 and identical components have been given the same reference numerals. According to the embodiment of Figs. 6 and 7, the partitions and the dampers have been eliminated and the spacing of the perforations through the plate 124 and the resultant spacing of the nozzles 150 have been changed. More particularly, the spacing between the perforations and, therefore, between the nozzles 150, decreases in a general left-to-right direction as viewed in Figs. 6 and 7, i.e., in a direction between the front wall 112, where the feeder 144 is located and the rear wall 114, where the drain pipe 156 is located. Thus, the number of perforations and nozzles 150, and the resultant flow rate of air introduced into the bed 122, increases and the density of the bed decreases in the same direction. Thus, a momentum is imparted to the bed material in a manner similar to that of the previous embodiment, which induces a circulation of the materials in the direction shown by the dashed flow arrow in Fig. 6 and thus insures an improved distribution, mixing and residence time of the particulate material.

The nozzles can take a different configuration from that discussed above, and the number, the specific locations, and the orientation of the nozzles can be varied as long as the above objectives and results are achieved. Also a bank, or series, of heat exchange tubes can be provided in the enclosures for circulating water in a heat exchange relationship with the bed 22 in a conventional manner.

Other latitudes of modification, change and substitution is intended in the foregoing disclosure and in some instances some features of the invention will be employed without a corresponding use of other features.

## Claims

1. A fluidized bed heat exchanger (10) comprising a perforated plate (24) adapted to support a bed (22) of particulate material, with a plurality of nozzles (36) disposed in the perforations and oriented to discharge fluidizing air in directions substantially parallel to the plate (24); means (26) for passing air through the nozzles (36) to fluidise particulate material in said bed (22); inlet means (32) for introducing additional particulate material to said bed; and drain means (34, 50) registering with said bed (22) for discharging spent bed material, characterised in that the nozzles (36) comprise three groups; a first group oriented to discharge air in a first direction towards the drain means (34, 50) and second and third groups oriented to discharge air in opposite senses on a common direction substantially perpendicular to the first direction and directly towards the drain means (34, 50), whereby air from the first group of nozzles induces movement of bed material towards the common direction, and air from the second and third groups induces movement of bed material towards the drain means (34, 50).

2. An heat exchanger according to Claim 1 comprising four upright walls (12, 14, 16, 17) for confining a bed (22) and characterised in that the inlet means (32) is associated with one wall (12), and the drain means (34) and the second and third groups of nozzles (36) are located adjacent the opposite wall (14) which defines said common direction.

3. An heat exchanger according to Claim 1 comprising four upright walls (12, 14, 16, 17) for confining a said bed (22), characterised in that the inlet means (32) are associated with two opposite walls (12, 14) and the drain means (34) is located centrally in the plate (24) between the walls (12, 14), the nozzles (36) comprising a fourth group oriented to discharge air in a direction opposite to the first direction.

4. A fluidized bed heat exchanger (110) comprising a perforated plate (124) adapted to support a bed (122) of particulate material, with a plurality of nozzles (150) disposed in the perforations for discharging fluidising air into said bed (122), means (126) for passing air through the nozzles (150) to fluidise particulate material in said bed (122); inlet means (144) for introducing additional particulate material to said bed; and drain means (146) registering with said bed (122) for discharging spent bed material, characterised in that each nozzle (150) is oriented to discharge air in a direction perpendicular to the plate (124), and in that the density of nozzles (150) increases in a direction across the plate (124) from the inlet means (144) to the drain means (146) to create a differential pattern of discharged air thereacross to induce circulation of material in said bed (122) from the inlet means (144) to the drain means (146).

5. An heat exchanger according to Claim 4 characterised in that said differential pattern of air flow induces circulation of materials in a said bed (122) from the inlet means (144) to the drain means (146) in the lower portion of said bed (122) and from the drain means (146) to the inlet means (144) in the upper portion of said bed (122).

6. An heat exchanger according to Claim 4 or Claim 5 comprising four upright walls (112, 114, 116) for confining a said bed (122), characterised in that the inlet means (144) is associated with one wall (112) and the drain means (146) is located adjacent the opposite wall (114), the density of nozzles (150) increasing towards the opposite wall (114).

7. An heat exchanger according to any preceding Claim characterised in that each nozzle (36, 150) includes a vertical portion extending upwardly from the plate (24, 124) such that bed material extending around the vertical portions are dormant so as to insulate the plate (24, 124) from heat in a said bed (22, 122).

**Patentansprüche**

1. Fließbettwärmetauscher (10) mit einer gelochten Platte (24), die ein Bett (22) eines Stoffteilchenmaterials trägt, mit mehreren Ansatzrohren (36), die in den Durchbohrungen angeordnet und so ausgerichtet sind, daß sie fluidisierende Luft in Richtungen ausströmen lassen, die im wesentlichen parallel zu der Platte (24) verlaufen, einer Einrichtung (26) zum Leiten der Luft durch die Ansatzrohre (36), um Stoffteilchenmaterial in dem Bett (22) zu fluidisieren, einer Einlaßeinrichtung (32) zum Einführen von zusätzlichem Stoffteilchenmaterial in das Bett und einer Auslaßeinrichtung (34, 50), die mit dem Bett (22) in Verbindung steht, um verbrauchtes Bettmaterial abzulassen, dadurch gekennzeichnet, daß die Ansatzrohre (36) drei Gruppen aufweisen, wobei eine erste Gruppe so ausgerichtet ist, daß sie Luft in einer ersten Richtung auf die Auslaßeinrichtung (34, 50) hin ausströmen läßt, und wobei die zweite und die dritte Gruppe so ausgerichtet sind, daß sie Luft im entgegengesetzten Sinn einer gemeinsamen Richtung, die im wesentlichen senkrecht zu der ersten Richtung und direkt auf die Auslaßeinrichtung (34, 50) hin verläuft, ausströmen lassen, wobei die Luft der ersten Gruppe von Ansatzrohren eine Bewegung des Bettmaterials auf die gemeinsame Richtung zu hervorruft, während die Luft der zweiten und der dritten Gruppe eine Bewegung des Bettmaterials in Richtung der Auslaßeinrichtung (34, 50) hervorruft.

2. Wärmetauscher nach Anspruch 1 mit vier aufrechten Wänden (12, 14, 16, 17), die ein Bett (22) umschließen, dadurch gekennzeichnet, daß die Einlaßeinrichtung (32) mit einer Wand (12) verbunden ist und daß die Auslaßeinrichtung (34) und die zweite und dritte Gruppe der Ansatzrohre (36) an die gegenüberliegende Wand (14) angrenzend angeordnet sind, die die gemeinsame Richtung abgrenzt.

3. Wärmetauscher nach Anspruch 1 mit vier aufrechten Wänden (12, 14, 16, 17), die das Bett (22) umschließen, dadurch gekennzeichnet, daß die Einlaßeinrichtung (32) mit zwei gegenüberliegenden Wänden (12, 14) verbunden ist und daß die Auslaßeinrichtung (34) in der Mitte der Platte (24) zwischen den Wänden (12, 14) angeordnet ist, wobei die Ansatzrohre (36) eine vierte Gruppe aufweisen, die so ausgerichtet ist, daß sie Luft in einer Richtung entgegengesetzt zu der ersten Richtung ausströmen läßt.

4. Fließbettwärmetauscher (110) mit einer gelochten Platte (124), die ein Bett (122) aus Stoffteilchenmaterial trägt, mit mehreren Ansatzrohren (150), die in den Durchbohrungen angeordnet sind, um fluidisierende Luft in das Bett (122) ausströmen zu lassen, einer Einrichtung (126) zum Leiten der Luft durch die Ansatzrohre (150), um Stoffteilchenmaterial in dem Bett zu fluidisieren, einer Einlaßeinrichtung (144) zum Einleiten von zusätzlichem Stoffteilchenmaterial in das Bett und einer Auslaßeinrichtung (146), die mit dem Bett (122) in Verbindung steht, um verbrauchtes Bettmaterial abzuführen, dadurch gekennzeichnet, daß jedes Ansatzrohr (150) so ausgerichtet ist, daß es Luft in einer Richtung senkrecht zu der Platte (124) ausströmen läßt, und daß die Dichte der Ansatzrohre (150) in einer von der Einlaßeinrichtung (144) zu der Auslaßeinrichtung (146) verlaufenden Richtung zunimmt, um einen differenzierten Verlauf der ausgelassenen Luft über die Platte (124) zu verursachen, um einen Umlauf des Materials in dem Bett (122) von der Einlaßeinrichtung (144) zu der Auslaßeinrichtung (146) hervorzurufen.

5. Wärmetauscher nach Anspruch 4, dadurch gekennzeichnet, daß der differenzierte Verlauf des Luftstromes einen Umlauf des Materials in dem Bett (122) von der Einlaßeinrichtung (144) zu der Auslaßeinrichtung (146) in einem unteren Abschnitt des Bettes (122) und von der Auslaßeinrichtung (146) zu der Einlaßeinrichtung (144) in dem oberen Abschnitt des Bettes (122) hervorruft.

6. Wärmetauscher nach Anspruch 4 oder 5 mit vier aufrechten Wänden (112, 114, 116), die das Bett (122) umschließen, dadurch gekennzeichnet, daß die Einlaßeinrichtung (144) mit einer Wand (112) verbunden ist und daß die Auslaßeinrichtung (146) an die gegenüberliegende Wand (114) angrenzend angeordnet ist, wobei die Dichte der Ansatzrohre (150) in Richtung der gegenüberliegenden Wand (114) ansteigt.

7. Wärmetauscher nach einem der vorhergehenden Ansprüche, dadurch gekennzeichnet, daß jedes Ansatzrohr (36, 150) einen vertikalen Abschnitt aufweist, der sich von der Platte (24, 124) aufwärts erstreckt, so daß Bettmaterial, das die vertikalen Abschnitte umgibt, sich in Ruhe befindet, wodurch die Platte (24, 124) gegenüber der Hitze in dem Bett (22, 122) isoliert ist.

**Revendications**

1. Echangeur de chaleur à lit fluidisé (10) comprenant une plaque perforée (24) conçue pour supporter un lit (22) de matériau particulaire et pourvue de plusieurs buses (36) disposées dans les perforations et orientées pour envoyer de l'air fluidisant dans des directions sensiblement parallèles à la plaque (24); des moyens (26) pour faire passer de l'air par les buses (36) en vue de fluidiser le matériau particulaire dans ledit lit (22); des moyens d'entrée (32) destinés à introduire du matériau particulaire supplémentaire dans ledit lit, et des moyens d'extraction (34, 50), en liaison avec ledit lit (22), pour évacuer le matériau usé du lit, caractérisé en ce que les buses (36) se décomposent en trois groupes, le premier étant orienté afin d'envoyer de l'air dans une première direction, vers les moyens d'extraction (34, 50), le second et le troisième étant orientés pour envoyer de l'air dans des sens opposés selon une une direction commune sensiblement perpendiculaire à la première direction et directement vers les moyens d'extraction (34, 50), l'air provenant du premier groupe de buses provoquant un de-1placement du matériau du lit vers la direction commune, et l'air provenant des second et troisième groupes provoquant un déplacement du matériau du lit vers les moyens d'extraction (34, 50).

2. Echangeur de chaleur selon la revendication 1 comprenant quatre parois verticales (12, 14, 16, 17) destinées à contenir un lit (22), caractérisé en ce que les moyens d'entrée (32) sont associés à une paroi (12) et en ce que les moyens d'extraction (34) ainsi que le second et le troisième groupes de buses (36) sont disposés adjacents à la paroi opposée (14) définissant ladite direction commune.

3. Echangeur de chaleur selon la revendication 1 comprenant quatre parois verticales (12, 14, 16, 17) destinées à contenir ledit lit (22), caractérisé en ce que les moyens d'entrée (32) sont associés à deux parois opposées (12, 14) et en ce que les moyens d'extraction (34) sont disposés au centre de la plaque (24) entre les parois (12, 14), les buses (36) comportant un quatrième groupe orienté pour envoyer de l'air dans une direction opposées à la première direction.

4. Echangeur de chaleur à lit fluidisé (110) comprenant une plaque perforée (124) conçue pour supporter un lit (122) de matériau particulaire et pourvue de plusieurs buses (150) disposées dans les perforations afin d'envoyer de l'air fluidisant dans ledit lit (122), des moyens (126) pour faire passer de l'air par les buses (150) en vue de fluidiser le matériau particulaire dans ledit lit (122), des moyens d'entrée (144) pour introduire du matériau particulaire supplémentaire dans ledit lit, et des moyens d'extraction (146) en liaison avec le lit (122) pour évacuer le matériau usé du lit, caractérisé en ce que chaque buse (150) est orientée pour envoyer de l'air dans une direction perpendiculaire à la plaque (124), et en ce que la densité des buses (150) augmente d'une extrémité à l'autre de la plaque (124) dans le sens allant des moyens d'entrée (144) vers les moyens d'extraction (146), afin de créer une structure différenciée de l'air qui s'écoule et provoquer la circulation de matériau dans ledit lit (122) depuis les moyens d'entrée (144) jusqu'aux moyens d'extraction (146).

5. Echangeur de chaleur selon la revendication 4, caractérisé en ce que ladite structure différenciée de l'écoulement d'air provoque la circulation de matériaux dans ledit lit (122) depuis les moyens d'entrée (144) jusqu'aux moyens d'extraction (146) dans la partie inférieure dudit lit (122) et depuis les moyens d'extraction (146) jusqu'aux moyens d'entrée (144) dans la partie supérieure dudit lit (122).

6. Echangeur de chaleur selon la revendication 4 ou 5 comprenant quatre parois verticales (112, 114, 116) destinées à contenir ledit lit (122) caractérisé en ce que les moyens d'entrée (144) sont associés à une paroi (112) et les moyens d'extraction (146) sont disposés adjacents à la parois opposée (114), la densité des buses augmentant lorsque l'on s'approche de la paroi opposée (114).

7. Echangeur de chaleur selon l'une quelconque des revendications précédentes, caractérisé en ce que chaque buse (36, 150) comprend une partie verticale s'étendant vers le haut depuis la plaque (24, 124) de sorte que le matériau du lit, situé autour des parties verticales, soit au repos de manière à isoler la plaque (24, 124) de la chaleur dudit lit (22, 122).

FIG. 1.

FIG. 2.

FIG. 4.

FIG. 3.

FIG.5

## FIG.6

FIG. 7